# EUROPÄISCHE PATENTANMELDUNG

(11) **EP 1 923 622 A2**
(43) Veröffentlichungstag der Anmeldung: **21.05.2008**
(21) Anmeldenummer: 07022198.1
(22) Anmeldetag: 15.11.2007
(51) Int. Cl.: F21S 8/00, F21V 33/00, H02G 3/00

(54) **Medienverteiler mit auswechselbaren Leuchtenkörpern**

(30) Priorität: 15.11.2006 DE 202006017526 U
(71) Anmelder: TRILUX GmbH & Co. KG, 59759 Arnsberg (DE)
(72) Erfinder: Bruchhage, Markus, 59821 Arnsberg (DE); Friedrich, Reinhard, 59469 Ense (DE)
(74) Vertreter: Bobzien, Hans Christoph

(57) **Zusammenfassung**

Die Erfindung betrifft einen Medienverteiler mit einem an einem Bauträger befestigbarem Grundprofil 2 zur Aufnahme von gebäudeseitig verbindbaren Versorgungs- und/oder Datenleitungen und mindestens einem Anschlusselement sowie mindestens einem verschiebbar an dem Grundprofil 2 angeordneten und im Verhältnis zu einer Längsrichtung des Medienverteilers verstellbaren Zusatzelement. Um ein leichteres Versetzen des Zusatzkörpers im Verhältnis zum Grundprofil 2 zu ermöglichen und ein einfaches Austauschen des Zusatzkörpers zu ermöglichen, wird vorgeschlagen, zwischen dem Grundprofil 2 und dem Zusatzkörper Verschiebemittel auszubilden, die mindestens eine Profilschiene und ein mit dieser Profilschiene zusammenwirkendes Gleitelement umfassen.

## Beschreibung

Die Erfindung betrifft einen Medienverteiler, insbesondere eine Decken- oder Schulversorgungseinheit, mit einem an einem Bauträger befestigbarem Grundprofil zur Aufnahme von gebäudeseitig verbindbaren Versorgungs- und/oder Datenleitungen und mindestens einem Anschlusselement sowie mindestens einem verschiebbar an dem Grundprofil angeordneten und im Verhältnis zu einer Längsrichtung des Medienverteilers verstellbaren Zusatzelement.

Das Grundprofil ist als im Wesentlichen geschlossener Hohlkörper ausbildet und kann einstückig oder aus mehreren Profilelementen zusammengesetzt sein zur Bildung eines innenseitig hohlen Versorgungsbalkens zur Aufnahme der Versorgungs- und/oder Datenleitungen. Die Anschlusselemente können z. B. Gasentnahmeanschlüsse, Wasseranschlüsse, Steckdosen, Datendosen u. ä. sowie andere Module umfassen und können an verschiedenen Stellen bedarfsgerecht in Ausnehmungen des Grundprofils eingesetzt werden. Die nicht verwendeten Abschnitte in der Ausnehmung werden mit Sichtblenden abgedeckt. Derartige Medienverteiler werden insbesondere in Schulen und im medizinischen Bereich, wie z.B. Krankenhäusern, eingesetzt.

Neben den aufgezählten Vorteilen bieten solche Medienverteiler zudem eine kostengünstige Sanierungsmöglichkeit zur Anordnung von Versorgungs- und/oder Datenleitungen in Altbauten.

Aus dem Stand der Technik ist bekannt, den einen als Leuchtenkörper ausgebildeten Zusatzkörper längsverschieblich an dem Grundprofil anzuordnen, um diesen bedarfsgerecht oberhalb einer Arbeitsstelle oder Wirkstelle leuchtungstechnisch optimal zu positionieren. Nachteilig sind die von außen sichtbaren und berührbaren Teile des integrierten Verschiebemechanismus, die zum Beispiel Dichtlippen, Leitführungen usw. umfassen. Diese Teile können Verletzungen bei dem Personal hervorrufen und erschweren außerdem die Reinigung und Desinfektion des Medienverteilers. Daneben lassen sich die Beleuchtungskörper nicht gegen Leuchtenkörper mit anderen lichttechnischen Eigenschaften oder anderen Designs austauschen, um leicht Designänderungswünsche zu realisieren, z.B. im Falle einer Renovierung oder zur Realisierung unterschiedlicher Designvorgaben in verschiedenen Stationen eines Krankenhauses.

Ausgehend von diesem Stand der Technik und den damit verbundenen Nachteilen liegt der Erfindung das technische Problem zugrunde, einen Medienverteiler vorzusehen, der diese Nachteile zumindest teilweise vermeidet und ein leichteres Versetzen des Zusatzkörpers im Verhältnis zum Grundprofil ermöglicht sowie einfacher austauschbar ist.

Dieses technische Problem wird erfindungsgemäß dadurch gelöst, dass zwischen dem Grundprofil und dem Zusatzkörper Verschiebemittel ausgebildet sind, die mindestens eine Profilschiene und ein mit dieser Profilschiene zusammenwirkendes Gleitelement umfassen.

Durch die an dem einen Element ausgebildete Profilschiene und das an dem Gegenelement ausgebildeten Gleitelement, das in Einbaulage mit der Profilschiene zusammenwirkt, ist ein besonders leichtes Versetzen des Zusatzkörpers relativ zu dem Grundprofil möglich. Die Profilschiene erstreckt sich vorzugsweise in Längserstreckungsrichtung des Grundprofils und der Zusatzkörper ist als Leuchtenkörper ausgebildet.

Vorzugsweise ist das Gleitelement in einer Profilschiene geführt, die im Wesentlichen C - förmig ausgebildet ist. Als besonders vorteilhaft hat sich herausgestellt, die Profilschiene an dem Leuchtenkörper und das Gleitelement an dem Grundprofil anzuordnen. Das Gleitelement kann einstückig ausgebildet sein oder aus getrennten Gleitelementen bestehen, die kollinear beabstandet zueinander montiert sind. Die Gleitelemente bestehen vorzugsweise aus einem Kunststoff mit guten Gleiteigenschaften.

Auch bestehende Medienverteiler sind durch Anschrauben der Profilschiene und einer oder mehrer Gleitelemente nachrüstbar.

Die Verbindung der Leitungen zwischen dem Leuchtenkörper und dem Grundkörper kann über Steckverbindungen erfolgen, um einen einfachen Anschluss zu ermöglichen.

Ferner betrifft die Erfindung einen Medienverteiler, insbesondere nach der vorgenannten Art, welcher dadurch gekennzeichnet ist, dass der Leuchtenkörper schubladenartig abziehbar ist, um auf einfache Weise Zugang zu den Leuchtmitteln des Leuchtenkörpers zu erhalten. Vorzugsweise ist der Leuchtenkörper nach vorne abziehbar.

Weitere Einzelheiten, Vorteile und Merkmale der Erfindung lassen sich dem nachfolgenden Teil der Beschreibung entnehmen, in dem ein bevorzugtes Ausführungsbeispiel der erfindungsgemäßen Vorrichtung anhand der Zeichnungen näher erläutert wird. Es zeigen:
- Fig. 1: eine Frontansicht einer erfindungsgemäß ausgebildeten Versorgungseinheit;
- Fig. 2: einen vergrößerten Querschnitt entlang der Linie II - II gemäß Figur 1; und
- Figur 3: eine vergrößerte perspektivische Ansicht des stirnseitigen Endes eines Leuchtenelements.

Gleiche oder gleich wirkende Teile sind mit denselben Bezugszeichen versehen.

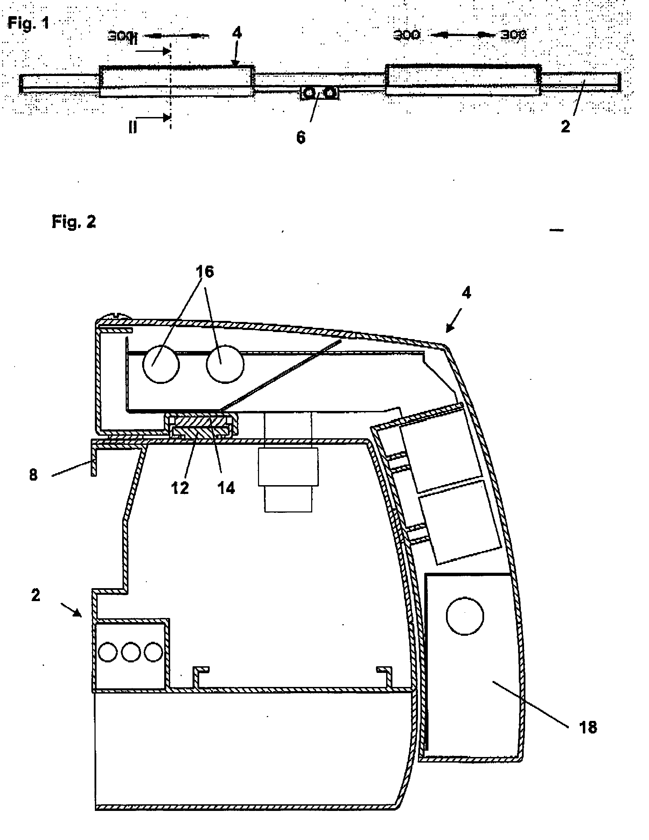

Demnach besteht die erfindungsgemäße Versorgungseinheit im Wesentlichen aus einem sich in Längsrichtung erstreckenden Grundprofil 2 und zwei oberseitig auf das Grundprofil aufgesetzten Beleuchtungskörpern 4. Die Beleuchtungskörper 4 sind im Verhältnis zur in Figur 1 dargestellten Ruheposition axial in beiden Richtungen um 300mm im Verhältnis zu dem Grundprofil 2 verschiebbar. An der Unterseite des Grundprofils sind in der Mitte zwei Gasentnahmeventile 6 angeordnet. Die Versorgungseinheit erstreckt sich beispielsweise entlang einer Wand in einem Krankenhaus oberhalb von zwei parallel nebeneinander stehenden Betten, so dass die Beleuchtungskörper 4 jeweils über den Stirnenden eines jeden Bettes positioniert sind.

Die Figur 2 zeigt einen Querschnitt durch die Mitte der Figur 1 linksseitigen Beleuchtungskörpers 4 und des Grundprofils 2 entlang der Linie I - I. Demnach besteht das Grundprofil 2 aus mehreren Profilelementen, die formschlüssig zur Bildung eines geschlossenen Kanals zusammengesetzt sind. Das Grundprofil 2 weist an seiner Rückseite einen Montageflansch 8 auf, mit welchem dieser in einer wandseitig verschraubten Montageleiste (nicht dargestellt) einhängbar ist. Der Montageflansch 8 hintergreift in Einbaulage die Montageleiste formschlüssig und das Grundprofil hängt aufgrund des Eigengewichts fest an der Montageleiste.

Das Grundprofil 8 nimmt verschiedene Medienleitungen in voneinander getrennten Abschnitten auf. In der Figur 2 sind nicht dargestellte elektrische Leitungen geführt. Üblicherweise sind Starkstrom, Schwachstrom und Telefonleitungen getrennt voneinander in bestimmten Kammern in dem Grundprofil 2 geführt.

Auf der Oberseite des Versorgungsbalkens sind zwei rechteckige Gleitelemente 12 koaxial fluchtend und beabstandet zueinander angeschraubt. Diese Gleitelemente 12 weisen im vorliegenden Fall Abmessungen von 30 x 15 x 3 (Länge x Breite x Höhe) mm mit einem horizontal angeordneten Gleitsteg und einem sich unterseitig quer zu dem Gleitsteg erstreckenden Horizontalsteg auf. Die Gleitelemente 12 bestehen aus einem Kunststoff mit guten Gleiteigenschaften. Der im Querschnitt im Wesentlichen L-förmige Beleuchtungskörper 4 weist in einem horizontalen Abschnitt des rückseitigen Profils eine im Querschnitt C-förmige Profilschiene 14 auf, deren Geometrie korrespondierend zur Aufnahme der Gleitflächen der Gleitelemente 12 ausgebildet ist, so dass die Profilschiene längsverschieblich, aber spielfrei auf den Gleitelementen 12 geführt ist. Abnehmbare Kopfstücke 20 bilden Anschläge für die Gleitelemente 12.

In dem oberen, sich horizontal erstreckenden Schenkel der Beleuchtungskörper 4 sind zwei Leuchtstofflampen 16 parallel zueinander angeordnet, mit denen eine indirekte Beleuchtung realisierbar ist. In dem die Vorderseite des Grundprofils 2 umgreifenden vorderen Vertikalschenkel des Beleuchtungskörpers 4 ist eine Leselampe 18 zur Erzeugung eines direkten Lichts angeordnet.

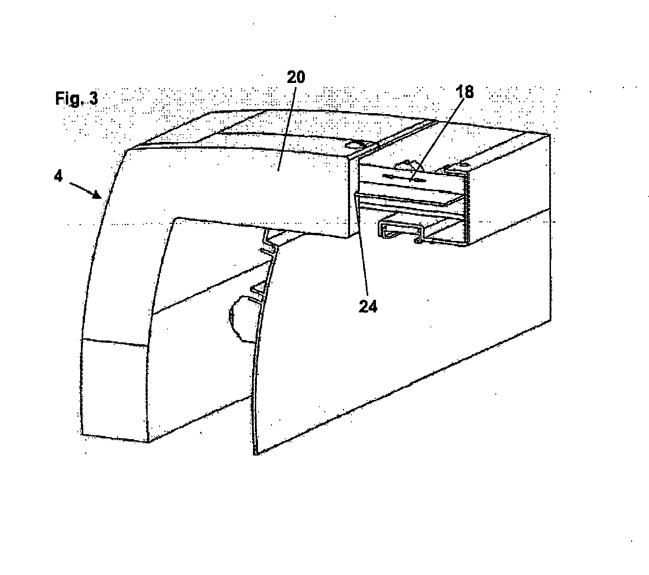

Wie Figur 3 zeigt, ist der auf das Grundprofil 2 aufgesetzte Beleuchtungskörper 4 schubladenartig befestigt, um die Leuchtstofflampen 18 und die Leselampe auswechseln zu können. Hierzu weist der Beleuchtungskörper 4 an den Stirnenden T-förmige Kopfstücke 20 auf, auf deren abtragenden Horizontalschenkeln die stirnseitigen Kopfstücke 20 des Beleuchtungskörpers mit einer innenseitigen Horizontalnut 24 verschieblich aufgesetzt sind. Durch Vorziehen des Beleuchtungskörpers 4 quer zur Längserstreckungsrichtung des Grundprofils 2 können somit einfach die indirekt strahlenden Leuchtstofflampen 16 ausgewechselt werden.

Der Gegenstand der vorliegenden Erfindung ergibt sich nicht nur aus dem Gegenstand der einzelnen Patentansprüche, sondern aus der Kombination der einzelnen Ansprüche untereinander. Alle in den Unterlagen - einschließlich der Zusammenfassung - offenbarten Aufgaben, Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

### Bezugszeichenliste

- 2: Grundprofil
- 4: Beleuchtungskörper
- 6: Gasentnahmeventil
- 8: Montageflansch
- 12: Gleitelement
- 14: Profilschiene
- 16: Leuchtstofflampe
- 18: Leselampe
- 20: Kopfstück
- 24: Horizontalnut

## Patentansprüche

1. Medienverteiler, insbesondere eine Decken- oder Schulversorgungseinheit, mit einem an einem Bauträger befestigbarem Grundprofil (2) zur Aufnahme von gebäudeseitig verbindbaren Versorgungs- und/oder Datenleitungen und mindestens einem Anschlusselement sowie mindestens einem verschiebbar an dem Grundprofil (2) angeordneten und im Verhältnis zu einer Längsrichtung des Medienverteilers verstellbaren Zusatzelement, **DADURCH GEKENNZEICHNET, dass** zwischen dem Grundprofil (2) und dem Zusatzelement (4) Verschiebemittel ausgebildet sind, die mindestens eine Profilschiene (14) und ein mit dieser Profilschiene (14) zusammenwirkendes Gleitelement (12) umfassen.

2. Medienverteiler nach Anspruch 1, **DADURCH GEKENNZEICHNET, dass** das Gleitelement (12) in der Profilschiene (14) geführt ist.

3. Medienverteiler nach Anspruch 1 oder 2, **DADURCH GEKENNZEICHNET, dass** die Profilschiene,(14) an dem Zusatzelement (4) angeordnet ist.

4. Medienverteiler, insbesondere eine Decken- oder Schulversorgungseinheit, mit einem an einem Bauträger befestigbaren Grundprofil (2) zur Aufnahme von Gebäude seitlich verbindbaren Versorgungs- und/oder Datenleitungen und mindestens einem Anschlusselement sowie mindestens einem verschiebbar an dem Grundprofil (2) angeordneten Zusatzelement, wobei zwischen dem Grundprofil (2) und dem Zusatzelement (4) Verschiebemittel ausgebildet sind, die mindestens eine Profilschiene (14) und ein in dieser Profilschiene (14) geführtes Gleitelement (12) zum Verstellen des Zusatzelementes (4) entlang einer Längserstreckungsrichtung des Medienverteilers, und dass Lampen (16, 18) in dem Grundprofil (2) und dem Zusatzelement (4) angeordnet sind.

5. Medienverteiler nach einem der vorhergehenden Ansprüche, **DADURCH GEKENNZEICHNET, dass** Zusatzelement als Beleuchtungskörper (4) ausgebildet ist, und dass eine Verbindung des Beleuchtungskörper (4) mit dem Grundkörper (2) über mindestens einen Steckverbinder erfolgt.

6. Medienverteiler, insbesondere nach Anspruch 4, **DADURCH GEKENNZEICHNET, dass** Beleuchtungskörper (4) schubladenartig abziehbar ist.

7. Medienverteiler nach Anspruch 5, **DADURCH GEKENNZEICHNET, dass** der Beleuchtungskörper (4) nach vorne abziehbar ist.

8. Medienverteiler nach einem der vorhergehenden Ansprüche, **DADURCH GEKENNZEICHNET, dass** das Zusatzelement austauschbar ist.
